# EUROPEAN PATENT SPECIFICATION

(11) **EP 1 559 622 B1**
(45) Date of publication and mention of the grant of the patent: **22.05.2013**
(21) Application number: 05001737.5
(22) Date of filing: 27.01.2005
(51) Int. Cl.: B60R 21/207, B60N 2/427

(54) **Vehicle passenger protecting apparatus**
Schutzvorrichtung für einen Beifahrer eines Fahrzeuges
Dispositif de protection d'un passager de véhicule

(30) Priority: 27.01.2004 JP 2004018298; 24.12.2004 JP 2004373908
(43) Date of publication of application: 03.08.2005
(73) Proprietor: TAKATA CORPORATION, Minato-ku, Tokyo 106-8510 (JP)
(72) Inventor: Higuchi, Kazu, Tokyo 106-8510 (JP)
(74) Representative: Banzer, Hans-Jörg

(56) References cited:
- EP-A1- 0 953 485
- DE-A1- 10 056 300
- US-A- 4 258 931
- US-A- 5 490 691
- US-A1- 2003 001 372
- US-B1- 6 338 501

## Description

The present invention relates to a vehicle passenger protecting apparatus mounted on an automobile or the like.

Various techniques for building vehicle passenger protecting apparatus protecting the passenger from colliding with the side wall of the vehicle such as the side window or the door, upon occurrence of a vehicle accident such as a collision on the side of the vehicle, have conventionally been proposed. For example, the configuration of a vehicle passenger protecting apparatus having an air bag housed along a side roof rail of an automobile is publicly known from Japanese Unexamined Patent Application Publication No. 2001-328504.

The referred document presents a technique for protecting a passenger by causing deployment and expansion of an air bag in the region between the passenger and the vehicle side wall upon occurrence of a vehicle accident. In order to ensure rapid protection of the passenger on a high technical level, further advances in technology are required.

In document EP 0 953 485 A1 a vehicle seat according to the preamble of claim 1 is disclosed.

Document DE 100 56 300 A1 discloses a passenger protecting apparatus for a seat where an airbag is driven reversibly between a fist state and a collision-preparing second state which may be inflated to the second state prior to a collision and retracted to the first state when the collision is avoided.

A further protecting apparatus is known from US 6,338,501 B1.

The present invention was developed in view of such circumstances, and has an object to provide a vehicle seat with a vehicle passenger protecting apparatus useful for improving protection of passengers upon occurrence of a vehicle accident.

This object is achieved by a vehicle seat according to claim 1. The dependent claims define preferred or advantageous embodiments of the present invention.

To solve the above-mentioned problems, the present invention is configured. The present invention is applicable to the configuration of a vehicle seat mounted on a vehicle such as an automobile, a train or a ship.

The present invention relates to a seat , which is mounted on a vehicle, and comprises at least passenger protecting means, driving means and control means.

Information detected, e.g. by detecting means, includes items of information for forecasting (determining) whether or not the vehicle collides with other vehicles, an obstacle or other objects of the collision, such as the distance to the object of collision or the relative speed. Typically, therefore, regarding a radar capable of detecting (measuring) the distance to the object of collision, the relative speed and the like by directing electromagnetic waves (multi-waves or laser beam) having a wavelength of a few millimeters toward the object of collision, and measuring the reflected waves from the object of collision, a radar known as a milli-wave radar or a laser radar may be used as representative detecting means.

The passenger protecting means of this invention has a function of protecting the passenger, upon occurrence of a vehicular accident such as a collision or roll-over of the vehicle, by intervening between the passenger and the vehicle. Typical examples of this passenger protecting means include an air bag and a protecting pad member which have an elasticity sufficient to alleviate the impact force acting on the passenger upon occurrence of a vehicular accident. Passenger protecting means are installed at portions of the seat corresponding to parts of the passenger to be protected. The parts of the passenger to be protected by the passenger protecting means include the head, neck, shoulder, chest, abdomen, knee and lower limbs. The passenger protecting means of this invention is applicable as passenger protecting means for protecting a passenger tending to move toward the vehicle side upon occurrence of a vehicle accident, or as passenger protecting means for ensuring passenger protection by preventing a so-called "submarine phenomenon" in which, upon occurrence of a vehicle accident, the passenger tends to move, slipping forward in the seat or through the seat belt diagonally downward.

The driving means has a function of reversibly driving the passenger protecting means from a first state to a collision-preparing second state, e.g. in a direction approaching the passenger to be protected or in a direction away from the passenger. In other words, in this embodiment the configuration is such that the passenger protecting means is allowed by the driving means to move in a direction approaching the passenger or in a direction away from the passenger.

Regarding the driving direction of the passenger protecting means by the driving means, the configuration may be such that the direction approaching the passenger and the direction away from the passenger are on an extension of each other, or such that these directions are on a curved or bent extension.

The control means of the present invention serves as means for controlling the driving means. More particularly, the control means controls, when a vehicle collision is predicted, the driving means so as to move the passenger protecting means from said first state, i.e. a first position, to said second state, i.e. a second position which generally is closer to the passenger than the first position. When the vehicle collision is determined to have been avoided, the control means controls the driving means so as to move the passenger protecting means from the second state to the first state. The first state is typically defined as the initial position in a state in which the passenger protecting means is housed. The second state may correspond to a position in the passenger protecting region in which the passenger is protected upon occurrence of a vehicle accident, to a position somewhat distant from the passenger protecting region preferably toward a vehicle member side. It should be noted that the first and the second states are not necessarily defined as fixed positions, but the first and the second states in this invention may also be defined as regions having some ranges in the moving direction of the passenger protecting means.

According to the vehicle passenger protecting apparatus, as described above, it is possible, when occurrence of a vehicle collision is foreseen, to move in advance the passenger protecting means from the first state, meaning e.g. the housing position thereof, to the second collision-preparing state, and to cope with a possible subsequent occurrence of a collision. This makes it possible to rapidly accomplish passenger protection upon occurrence of an accident since the passenger protecting means has moved in advance in a direction approaching the passenger. The passenger protecting means having such a configuration is effective for ensuring rapid passenger protection as compared with the passenger protecting means having a configuration operating upon occurrence of an accident. Upon occurrence of an accident, the passenger protecting means may have a configuration in which the passenger is protected at the second state, or may have a configuration in which the passenger protecting means is moved from the second state to a third state closer to the passenger and the passenger is protected at the third state. When, after foreseeing of a vehicle accident, the accident does not occur actually, it is possible to return the passenger protecting means from the second state to the first state, thereby coping with the next collision foreseeing.

By using the vehicle passenger protecting apparatus of this invention, as described above, it is possible to rapidly cope with passenger protection upon occurrence of an accident by means of the passenger protecting means set in advance in the second state, e.g. closer to the passenger, prior to actual occurrence of the vehicle accident. However, when an accident does not actually occur, the configuration in which the passenger protecting means is separated from the passenger is rational.

The vehicle passenger protecting apparatus has a configuration in which the passenger protecting means comprises an expandable and contractible air bag. The driving means in this case has gas feeding means, gas discharging means and energizing means. The gas feeding means has a function of permitting feeding of expanding gas into the interior of the air bag. Typically, the gas feeding means is composed of an air feeding path for feeding compressed air into the air bag, and an air pump for introducing compressed air into the air feeding path. As an expanding gas, air or a gas other than air is appropriately applicable. The gas discharging means has a function of discharging the gas from the interior of the air bag. Typically, the gas discharging means comprises an air discharging path communicating the air bag interior with the outside.

The energizing means has a function of energizing or biasing the air bag toward the first state. Typically, the energizing means is composed of elastic members such as springs or elastic cords.

When the detecting means foresees a vehicle collision, the control means controls the gas feeding means and the gas discharging means so as to cause expansion of the air bag to the second state, preferably against the energizing force of the energizing means. That is, the gas feeding means is activated in a state in which operation of the gas discharging means is discontinued. This makes it possible to fill the air bag interior with the expanding gas and to cause expansion of the air bag to the second state. When an accident is determined to have been avoided, the control means controls the gas feeding means and the gas discharging means so as to cause contraction of the air bag at the first position, preferably aided by the energizing force caused by the energizing means. That is, the gas discharging means is activated in a state in which operation of the gas feeding means is discontinued. As a result, the gas filled in the air bag is discharged outside the air bag and the air bag contracts, thereby permitting return of the air bag, e.g. by the energizing means to the first state.

According to the vehicle passenger protecting apparatus as described above, it is possible to achieve a configuration in which an air bag is used for ensuring rapid passenger protection upon occurrence of an accident. More specifically, in this vehicle passenger protecting apparatus, when a vehicle accident is foreseen, the air bag is expanded in advance from the first state representing the housing position of the air bag to the second state, to cope with occurrence of a possible subsequent collision. This permits rapid execution of passenger protection upon occurrence of an accident by using an air bag deployed and expanded in advance in a direction approaching the passenger. The configuration may be such that, upon occurrence of an accident, the passenger is protected by the air bag expanding to the second state, or the configuration may be such that the air bag is further expanded from the second state to a third state further closer to the passenger, thereby protecting the passenger. When a foreseen vehicle accident does not actually occur after foreseeing, the air bag can be returned from the second position to the first position, thereby coping with the next foreseeing of a collision. By using the vehicle passenger protecting apparatus of this invention, it is possible to rapidly cope with passenger protection upon occurrence of an accident by the air bag being deployed and expanded in advance in a direction approaching the passenger prior to occurrence of an accident.

In this passenger protecting apparatus, an air bag cover which covers the air bag forms a part of a vehicle seat. This air bag cover is operable between a first set position covering the air bag in an ordinary housed state, i.e. the first state, and a second set position allowing expansion of the air bag into the collision-preparing second state.

According to the invention, a part of the vehicle seat is simultaneously used as an air bag cover covering the air bag achieve a rational use of components.

The air bag cover preferably has a configuration in which it is elastically energized or biased by an elastic spring toward said first set position. Elastic springs applicable as this elastic spring include various elastic springs capable of elastically energizing such as a coil-shaped and a sheet-shaped springs. During the process of expanding into the second state, the air bag presses the air bag cover against the elastic energizing force of the elastic spring from the first set position to the second set position, and during the process of contracting into the ordinary housed state, it is pressed into the first state by the air bag cover moving to the first set position in accordance with the elastic energizing force of the elastic spring.

According to such a configuration, it is possible to carry out operations of the air bag cover by the use of the expansion force of the air bag and the elastic energizing force of the elastic spring, thus permitting achievement of a simpler structure.

The second state may be a position corresponding to a passenger protecting region in which the passenger is protected. The control means controls the driving means so as to arrange the passenger protecting means in the second state upon occurrence of a vehicle accident. This ensures passenger protection via the passenger protecting means arranged at the second position.

In such a vehicle passenger protecting apparatus, when a vehicle collision is foreseen, the passenger protecting means is moved in advance from the first state which is a housing position, to the second state to cope with a possible subsequent occurrence of a collision, and upon occurrence of an actual accident, the passenger can be protected, without the need for any further action, by using the passenger protecting means arranged in the second state. This makes it possible to more rapidly protect the passenger upon occurrence of an accident.

Alternatively, the second state may be defined as a position spaced apart from the passenger protecting region for protecting the passenger, in particular toward a side portion of said vehicle. Upon occurrence of a vehicle accident, the control means controls the driving means so as to arrange the passenger protecting means in a third state corresponding to the passenger protecting region. This ensures passenger protection via the passenger protecting means arranged in the third state closer to the passenger than in the second state. That is, in this aspect, the passenger protecting means is kept on standby in the second state between the first and the third states prior to occurrence of a vehicle collision. When the collision is avoided, the passenger protecting means is moved to the first state, and when the accident occurs, the passenger protecting means is moved to the third state.

The driving means which drives the passenger protecting means from the first state to the third state may be of a single kind, or a combination of a plurality of kinds of driving means. For example, a first driving means may be used for reversibly driving the passenger protecting means between the first and the second states, and a second driving means different from the first driving means may be used for driving the passenger protecting means from the second state to the third state. The operation of the passenger protecting means between the second and the third states in this case may be reversible, or may be irreversible in which the return from the third to the second states is not allowed.

In this case, it is possible to ensure rapid passenger protection upon occurrence of an accident by keeping the passenger protecting means on standby at the second state closer to the passenger than in the first state prior to occurrence of a vehicle collision. It is furthermore possible to prevent the passenger protecting means on standby prior to a vehicle collision from disturbing the passenger as far as possible by keeping the passenger protecting means on standby in the second state where the passenger protecting means is more distant from the passenger than in the third state.

The present invention also relates to a vehicle equipped with the seat as described above.

According to the present invention, as described above, driving of the passenger protecting means is reversibly possible between a first state and a second state, e.g. in a direction approaching the passenger and in a direction away from the passenger. When a vehicle collision is foreseen, it is possible to achieve a highly efficient technique of rapidly coping with passenger protection upon occurrence of an accident by a configuration in which the passenger protecting means is arranged in advance at a position close to the passenger to cope with occurrence of an accident.

Embodiments of the present invention will now be described with reference to the drawings.
Fig. 1 is schematically illustrating a passenger protecting apparatus which is not an embodiment of the present invention, mounted on the right side wall of a vehicle.
Fig. 2 illustrates an air bag housed in a retainer in the passenger protecting apparatus shown in Fig. 1.
Fig. 3 illustrates the process of deployment and expansion of the air bag in the passenger protecting apparatus of Fig. 1.
Fig. 4 illustrates the completion of deployment and expansion of the air bag in the passenger protecting apparatus of Fig. 1.
Fig. 5 illustrates housing of the air bag into the retainer in a modification of the passenger protecting apparatus of Figs. 1-4.
Fig. 6 illustrates housing of the air bag into the retainer in the passenger protecting apparatus of Fig. 5.
Fig. 7 illustrates the completion of deployment and expansion of the air bag in the passenger protecting apparatus of Fig. 5.
Fig. 8 illustrates an embodiment of the passenger protecting apparatus of the present invention, mounted on a vehicle (automobile).
Fig. 9 is a perspective view of a vehicle seat housing the passenger protecting apparatus of Fig. 8.
Fig. 10 illustrates the sectional structure of the vehicle seat shown in Fig. 9 taken along a line A-A.
Fig. 11 illustrates the sectional structure of the passenger protecting apparatus of Fig. 8 in an "initial control" state.
Fig. 12 is a perspective view of the vehicle seat when the passenger protecting apparatus of Fig. 8 is in the "collision foreseeing control" state.
Fig. 13 illustrates the sectional structure of the vehicle seat shown in Fig. 12 taken along a line B-B.

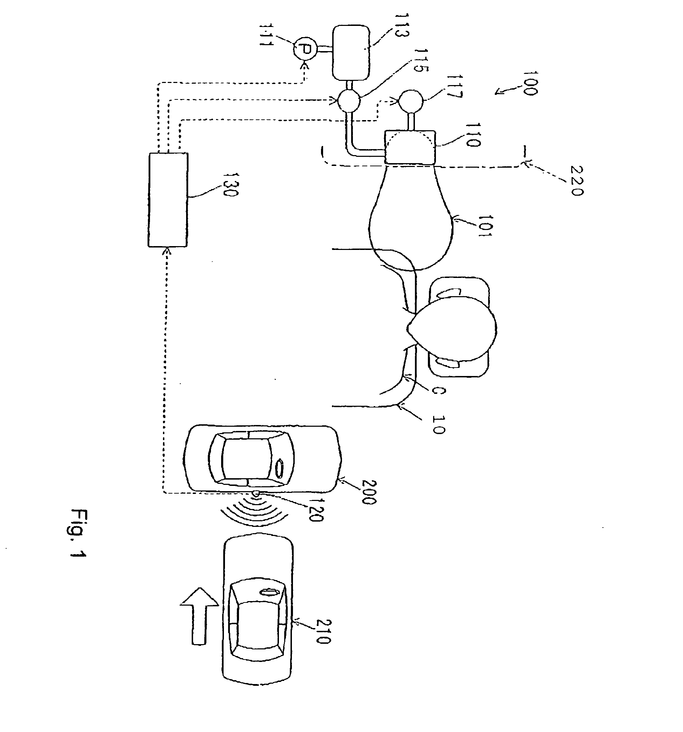

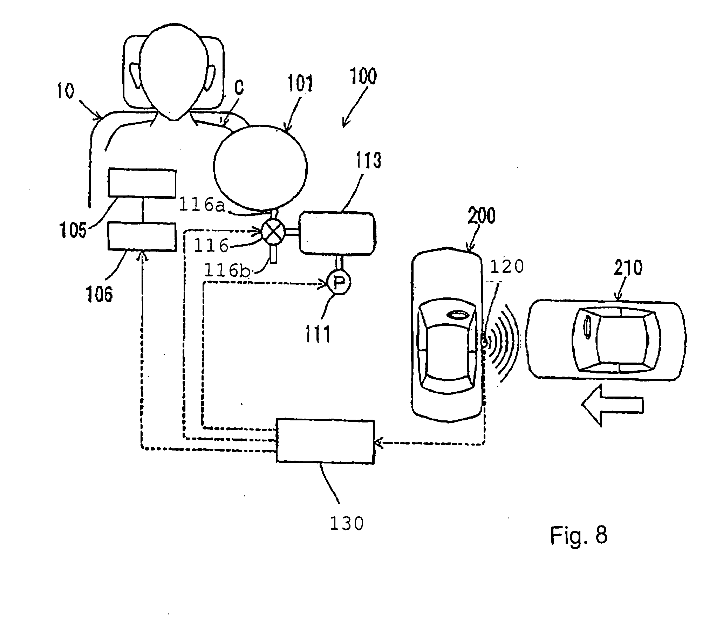

Passenger protecting apparatuses 100 will be described, with diverse modifications, with reference to Figs. 1 to 13, wherein only Figs. 8-13 show an embodiment of the present invention and then, passenger protecting apparatuses 400, 500 and 600 not representing embodiments of the vehicle passenger protecting apparatus of the present invention will be described with reference to Figs. 14 to 23. The apparatuses 100 are broadly classified as cases using an air bag for passenger protection, and the apparatuses 400, 500, 600 are broadly classified as cases using a movable protecting pad for passenger protection.

In Figs. 1 to 23, description is based on passenger protecting apparatuses installed to the right in the vehicle compartment.

A passenger protecting apparatus 100 attached to a right side wall 220 of a vehicle 200 (automobile) is schematically illustrated in Fig. 1. The right side wall 220 is a side door trim or a pillar of the vehicle. This passenger protecting apparatus 100 may be attached to the portion in the interior right side wall 220 to the right of the seat (right end of the seat).

As shown in Fig. 1, upon occurrence of a vehicle accident such as a side collision, e.g. with a vehicle 210, or a roll-over of the vehicle 200, the passenger protecting apparatus 100 has a function of protecting a passenger C sitting in a seat 10 of the vehicle 200. This passenger protecting apparatus 100 mainly comprises an air bag 101, a retainer 110, an air pump 111, an air tank 113, a filling valve 115, a discharging valve 117, a radar sensor 120, and a control unit (ECU) 130.

Upon occurrence of a vehicle accident such as a side collision or a roll-over of the vehicle 200, the air bag 101 has a function of protecting the passenger C by intervening in the passenger protecting region between the passenger C and the right side wall 220. The details will be described later. This air bag 101 is expandable and contractible, and is deployed and expanded in the passenger protecting region prior to occurrence of a collision of the vehicle 200. This air bag 101 before deployment and expansion is housed in a retainer 110 in a state folded into the predetermined shape in advance.

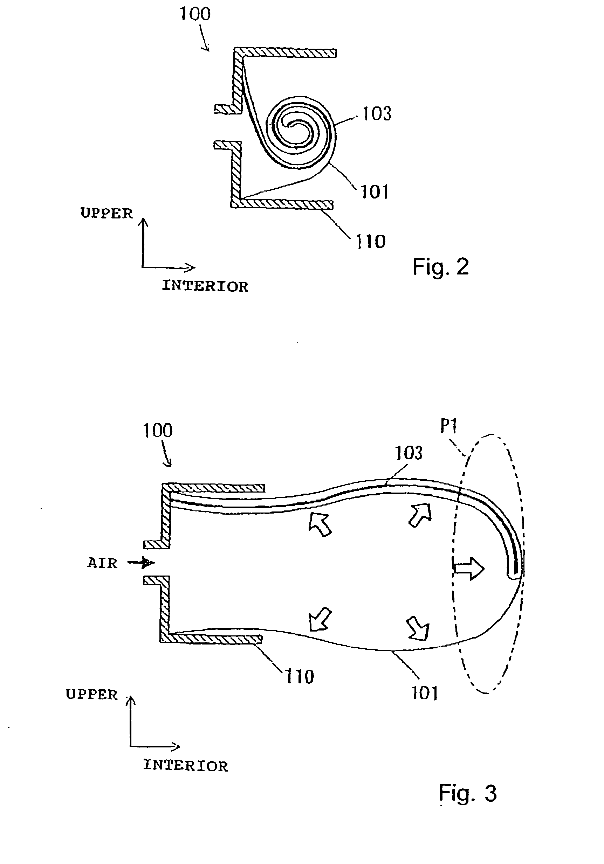

The detailed configuration of the air bag 101 will now be described with reference to Fig. 2. Fig. 2 illustrates the air bag 101 housed in the retainer 110 in the passenger protecting apparatus 100 shown in Fig. 1. In Fig. 2, the right side in the drawing represents the inside of the compartment.

As shown in Fig. 2, a spring member 103 is secured to the inner wall of the air bag 101. The spring member 103 is a spring having a function of imparting an elastic energizing force to the air bag so that the air bag 101 wound into a roll shape is housed in the retainer 110. More specifically, a spring made of a resin formed into a coil shape can be used as a spring member 103. As a result, when air for expansion is not fed into the air bag 101, the air bag 101 is housed in the retainer in the form of a wound roll.

Referring again to Fig. 1, the air pump 111 compresses air (to a higher pressure) and supplies the resultant compressed air to the air tank 113. The air tank 113 is a tank having a function of temporarily storing the compressed air supplied from the air pump 111. The filling valve 115 is installed in the air feeding path provided between the air bag 101 housed in the retainer 110 and the air tank 113, and conducts opening and closing of the air feeding path. the air discharging path for communicating of the air bag 101 housed in the retainer inside with the outside, and performs opening and closing of the air discharging path.

The radar sensor 120 is mounted on the side wall of the vehicle 200, and is used for detecting a vehicle at the side which is an object of collision for the vehicle 200 (vehicle 210 in Fig. 1) or foreseeing a collision of an obstacle on the side. By measuring waves reflected by the object of collision while directing electromagnetic waves having a wavelength of a few millimeters toward the object of collision (milli-wave or a laser beam), a radar known as a "milli-wave radar" or "laser radar", capable of detecting (measuring) detection information (detection signal) such as the distance to the object of collision and the relative speed may be used.

Although not specifically shown, the control unit 130 comprises a CPU (central processing unit), an input/output unit, a storage unit, and peripheral devices. This control unit 130 is electrically connected to the air pump 111, the filling valve 115, the discharging valve 117, and the radar sensor 120 to exchange detection signals and control signals with these component members. More specifically, detection information (detection signals) detected by the radar sensor 120 is entered as input signals into the control unit 130. The control unit 130 issues an opening signal or a closing signal to the filling valve 115 and the discharging valve 117 on the basis of the input signals from the radar sensor 120.

This control unit 130 may have a configuration for controlling only the passenger protecting apparatus 100, or a configuration for controlling one or more vehicle component members other than the passenger protecting apparatus, in addition to the passenger protecting apparatus 100.

Although not specifically shown, a detecting sensor determining whether or not the vehicle 200 has been subjected to an accident such as a collision or roll-over is provided on the vehicle 200. Detection information (detection signal) detected by this detection sensor is entered as an input signal into the control unit 130. A sensor known as a "acceleration sensor" having a function of permitting detection (measurement) of detection information (detection signal) including accelerations in three axial directions (X-axis, Y-axis and Z-axis) acting on the vehicle is applicable as a detection sensor.

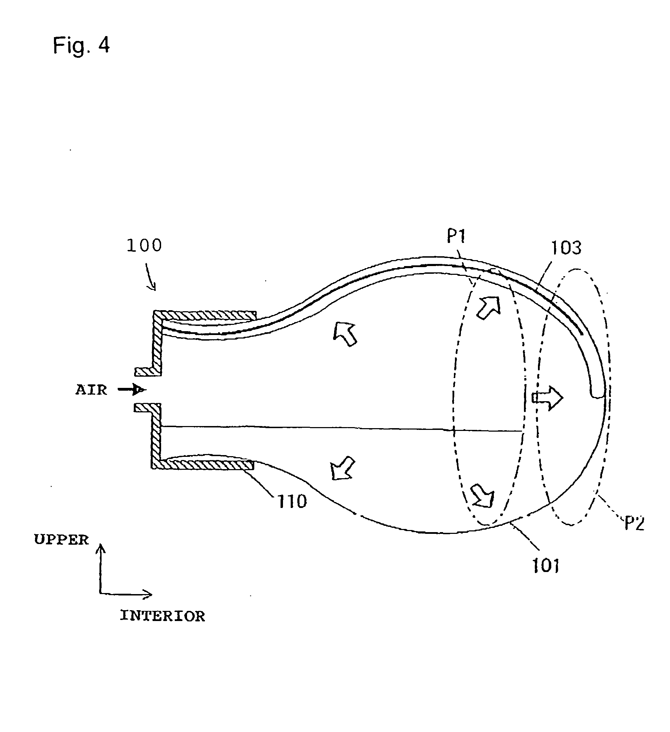

The operation of the passenger protecting apparatus 100 having the above-mentioned configuration will now be described with reference to Figs. 3 and 4 in addition to Figs. 1 and 2. Fig. 3 illustrates the process of deployment and expansion of the air bag 101 in the passenger protecting apparatus 100, and Fig. 4 shows the air bag 101 upon the completion of deployment and expansion in the passenger protecting apparatus 100. In Figs. 3 and 4, the right side of the drawing represents the inside of the compartment.

In Fig. 1, the radar sensor 120 constantly detects information relative to an object of collision (a vehicle or an obstacle) on a side of the vehicle 200, the information about collision with the vehicle 210 in this embodiment, and enters the detected information into the control unit 130. On the basis of this information, the control unit 130 foresees a collision by determining the possibility of collision of the vehicle 200 (own vehicle) with the other vehicle 210 (other vehicle).

Upon start of operation of the vehicle 200, the control unit 130 causes operation of the air pump 111 in a state in which a closing signal is issued to the filling valve 115. This permits setting of the pressure in the air tank at a value elevated in advance to a predetermined pressure value. When no object of collision is detected on a side of the vehicle 200 by the radar sensor 120, i.e., when no side collision is foreseen, the control unit 130 outputs an opening signal to the discharging valve 117, and issues a closing signal to the filling valve 115. As a result, the air bag 101 is never filled with compressed air.

When the radar sensor 120 detects a vehicle 210 near a side of the vehicle 200 and determines a high possibility of a side collision of the vehicle 210 with the vehicle 200, the control unit 130 issues a closing signal to the discharging valve 117 prior to occurrence of a side collision of the vehicle 200, and outputs an opening signal to the filling valve 115. As a result, compressed air compressed in advance in the air tank 113 is filled (fed) into the air bag 101 through the air feeding path. The air bag 101 is paid out from the air bag housing position (initial position) shown in Fig. 2 against the elastic energizing force of the spring member 103 as shown in Fig. 3 for deployment and expansion. This forms a state in which the spring member 103 is paid out in the air bag 101. In the state shown in Fig. 3, representing the process of deployment and expansion of the air bag 101, the passenger-side portion of the air bag 101 has reached the middle position P1.

When filling of compressed air into the air bag 101 is further continued from the state shown in Fig. 3, the air bag 101 is further deployed and expanded against the elastic energizing force of the spring member 103, and a state in which the passenger-side portion of the air bag 101 is deployed and expanded at the passenger protecting position P2 is achieved. At this point in time, the control unit 130 issues a closing signal to the filling valve 115, thereby completing the deployment and expansion of the air bag 101. This air bag 101 for which deployment and expansion have been completed before occurrence of a collision is ready for coping with passenger protection upon occurrence of a side collision of the vehicle 210 with the vehicle 200 which can occur subsequently. The air bag housing position (the initial position shown in Fig. 2) of the air bag 101 corresponds to a first state; the middle position P1 of the air bag 101 corresponds to a second state and the passenger protecting position P2 of the air bag 101 corresponds to a third state. It is also possible to omit the second state and more directly from the first state to the third state, which would then be regarded as a second state.

When the vehicle 210 actually collides on the side with the vehicle 200, i.e., when the above-mentioned detecting sensor detects occurrence of a collision, the impact force acting on the passenger is alleviated by the air bag 101 of which the deployment and expansion have been completed at the passenger protecting position P2 prior to occurrence of' the collision, thus ensuring passenger protection.

On the other hand, when the possibility of side collision of the vehicle 210 with the vehicle 200 has once been determined to be high, but actually, the side collision is avoided, and the radar sensor 120 no further detects an object of collision on a side of the vehicle 200, the control unit 130 performs control so as to house the air bag 101 into the retainer 110. More specifically, the control unit 130 issues an opening signal to the discharging valve 117 to discharge the air contained in the air bag 101 to outside the air bag 101 via the air discharging path. As a result, the air bag 101 in the state shown in Fig. 4 forms the state shown in Fig. 3, and then, is wound into a roll shape in accordance with the elastic energizing force of the spring member 103 to return to the housing position shown in Fig. 2. That is, the state in which the spring member 103 is wound is achieved in the air bag 101. As described above, the air bag 101 is reversibly operable in a direction approaching the passenger and in a direction away from the passenger between the housing position (initial position) shown in Fig. 2 and the passenger protecting position (deployment/expansion completing position) P2 shown in Fig. 4.

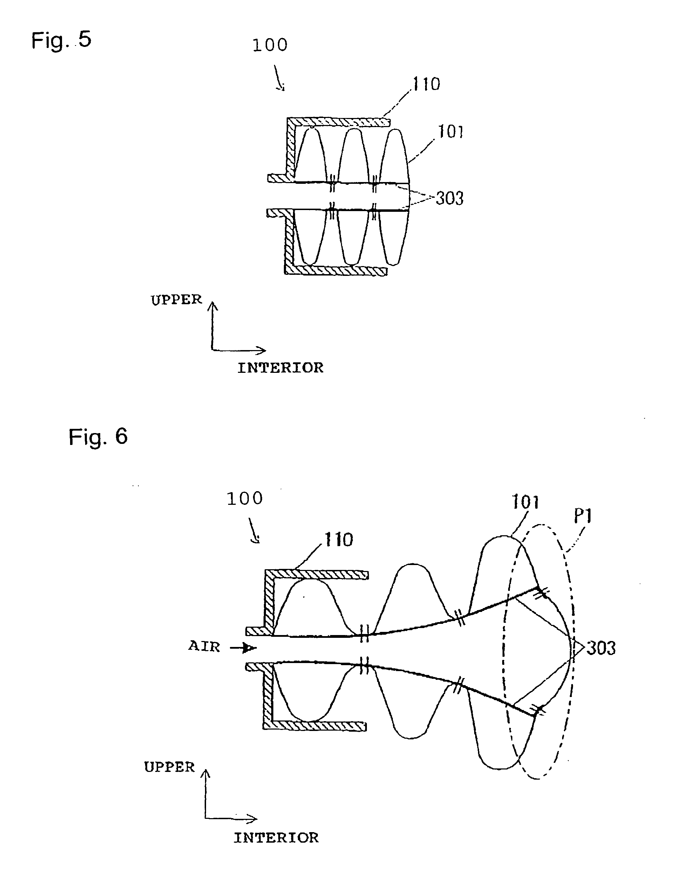

A configuration other than the one shown in Fig. 2 may be used for the configuration of the air bag 101. The configuration and the operation of a passenger protecting apparatus 100 having some modifications will now be described with reference to Figs. 5 to 7. In the passenger protecting apparatus 100 of Figs. 5 to 7, an air bag 101 similar to that in the passenger protecting apparatus 100 of Figs. 1 to 4 is used.

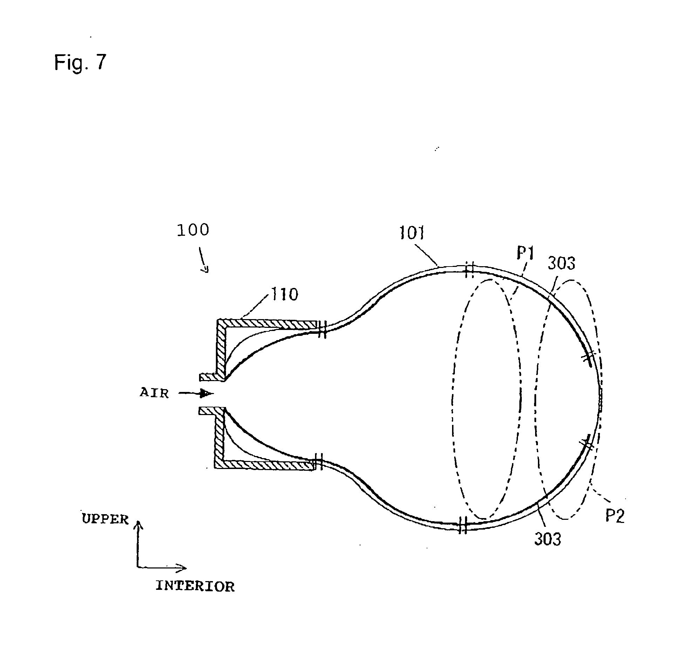

Fig. 5 illustrates the air bag 101 housed in the retainer 110 in the passenger protecting apparatus 100. Fig. 6 shows the process of deployment and expansion of the air bag 101 in the passenger protecting apparatus 100. Fig. 7 represents the air bag 101 upon completion of deployment and expansion in the passenger protecting apparatus 100. In Figs. 5 to 7, the right side of the drawing represents the inside of the compartment.

An elastic member 303 is secured by sewing to the inner wall of the air bag 101 in the passenger protecting apparatus 100 shown in Fig. 5. This elastic member 303 has a function of imparting an elastic energizing force to the air bag 101 so that the air bag 101 in a state folded into a bellow (accordion-shape) is housed in the retainer 110. More specifically, an elastic-cord-like member is applicable as an elastic member 303. As a result, when air for expansion is not fed into the air bag 101, the air bag 101 is housed in the retainer in a state folded into a bellow shape.

In this configuration of the passenger protecting apparatus 100, when the control unit 130 determines that the possibility of a side collision of the vehicle 210 with the vehicle 200 is high, and compressed air is fed to the air bag 101, the air bag 101 is released from the folding state against the elastic energizing force of the elastic member 303 as shown in Fig. 6 from the air bag housing position (initial position) shown in Fig. 5, and is deployed and expanded. That is, an elongated state of the elastic member 303 is achieved in the air bag 101. The state shown in Fig. 6 is the process of deployment and expansion of the air bag 101, in which a passenger-side portion of the air bag 101 has reached the middle point P1.

When the air bag 101 is further filled with compressed air from the state shown in Fig. 6, the air bag 101 is further deployed and expanded against the elastic energizing force of the elastic member 303, and the passenger-side portion of the air bag 101 is deployed and expanded to the passenger protecting position P2. This air bag 101 for which the deployment and expansion have been completed prior to occurrence of a collision is prepared for passenger protection upon occurrence of vehicle collision of the vehicle 210 with the vehicle 200 which can occur subsequently.

When the vehicle 210 actually collides with a side of the vehicle 200, the impact force acting on the passenger is alleviated by the air bag 101 for which the deployment and expansion have been completed at the passenger protecting position P2 prior to occurrence of the collision, thus ensuring passenger protection. On the other hand, when the possibility of side collision of the vehicle 210 with the vehicle 200 has once been determined to be high, but actually, the side collision is avoided and the radar sensor 120 no further detects an object of collision on the side of the vehicle 200, the air bag 101 in the state shown in Fig. 7 achieves the state shown in Fig. 6, and then, is folded into a bellow shape in accordance with the elastic energizing force of the elastic member 303 and returns to the housing position shown in Fig. 5. That is, the elastic member 303 is contracted in the air bag 101. As described above, the air bag 101 is reversibly operable in a direction approaching the passenger and in a direction away from the passenger between the housing position (initial position) shown in Fig. 5 and the passenger protecting position P2 (deployment/expansion completing position) shown in Fig. 7.

A further variation of the passenger protecting apparatus 100 representing an embodiment of the present invention will now be described with reference to Figs. 8 to 13. In Figs. 8 to 13 again, the passenger protecting apparatus used for the vehicle passenger on the right vehicle seat is described. The configuration of the passenger protecting apparatus of this embodiment is similarly applicable to any of the passengers on vehicle seats including the driver's seat, the assistant driver's seat, and the rear seats.

The passenger protecting apparatus 100 of this embodiment, as mounted on a vehicle 200 (automobile), is schematically illustrated in Fig. 8. Although details will be described later, this passenger protecting apparatus 100 is attached in this embodiment to the vehicle seat 10 on which the vehicle passenger C is seated, in contact to the passenger protecting apparatuses 100 of Figs. 8 to 13. In addition to this passenger protecting apparatus 100, the configuration may comprise another passenger protecting apparatuses mounted on body side members such as a trim or a pillar.

In Figs. 8-13, elements similar or equivalent to those of Figs. 1-7 bear the same reference numerals. This passenger protecting apparatus 100 mainly comprises an air bag 101, an air pump 111, an air tank 113, a control valve 116, and a control unit (ECU) 130, i.e. in contrast to the previously discussed apparatuses 100 of Figs. 1 to 7, only one valve is present. The components including a radar sensor 120 mounted on the vehicle 200 may be regarded as the passenger protecting apparatus 100.

Upon occurrence of a vehicle accident such as a side collision or a roll-over of the vehicle 200, the air bag 101 has a function of protecting the passenger C by intervening in the passenger protecting region of the vehicle passenger C. The details will be described later. In this embodiment, this air bag 101 again is expandable and contractible, and is deployed and expanded in the passenger protecting region prior to occurrence of a collision of the vehicle 200. As this passenger protecting region, the region between the vehicle passenger C and the vehicle side wall, or a region in front of the vehicle passenger C is adopted. This air bag 101 before deployment and expansion is housed in the vehicle seat 10 in a state folded into a predetermined shape in advance.

Although not specifically shown, the control unit 130 comprises a CPU (central processing unit), an input/output unit, a storage unit, and peripheral devices. In this embodiment, this control unit 130 is electrically connected to the driving means (actuator) 106, the air pump 111, the control valve 116 and the radar sensor 120 to exchange detection signals and control signals with these component members. More specifically, detection information , (detection signals) detected by the radar sensor 120 is entered as input signals into the control unit 130. The control unit 130 issues a driving signal to the driving means 106, a start or stop signal to the air pump 111, and an opening adjusting signal to the control valve 116 on the basis of an input signal from the radar sensor 120.

This control unit 130 may have a configuration for controlling only the passenger protecting apparatus 100, or a configuration for controlling the vehicle component members other than the passenger protecting apparatus, in addition to the passenger protecting apparatus 100 or for controlling the vehicle as a whole simultaneously.

The radar sensor 120 is mounted on the side wall of the vehicle 200, and is used for detecting a vehicle at the side which is an object of collision for the vehicle 200 (vehicle 210 in Fig. 8) as already described with reference to Figs. 1-7.

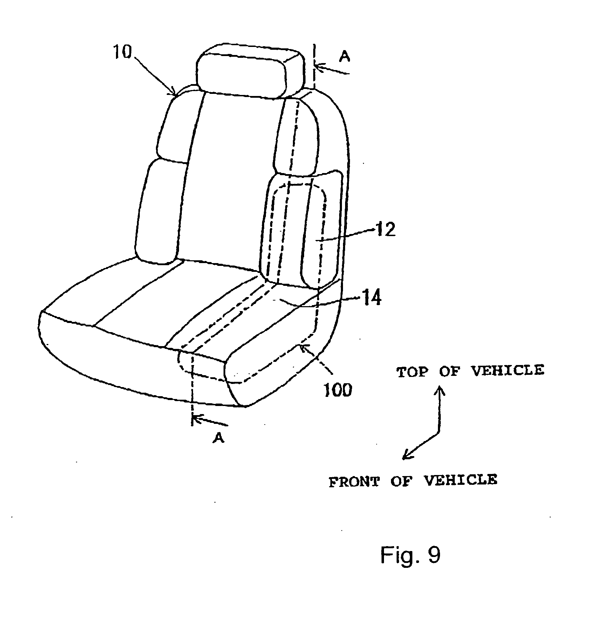

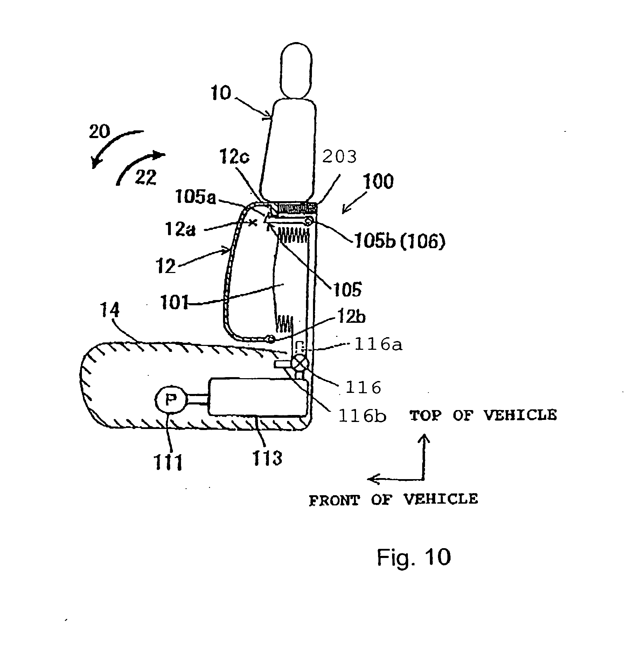

The detailed configuration of the above-mentioned passenger protecting apparatus 100 of Fig. 8 will now be described with reference to Figs. 9 and 10. Fig. 9 is a perspective view of the vehicle seat 10 in a state in which the passenger protecting apparatus 100 of this embodiment is housed in the vehicle seat. Fig. 10 illustrates a sectional structure of the vehicle seat 10 shown in Fig. 9 cut along the line A-A. In these Figs. 9 and 10, the passenger protecting apparatus 100 is incorporated into the vehicle seat 10, and control by the control unit 130 is not as yet executed.

As shown in Fig. 9, the passenger protecting apparatus 100 of this embodiment is housed in portions of the vehicle set 10 corresponding to the seat'back side portion and the seat cushion side portion. More specifically, as shown in Fig. 10, the air bag 101, a return spring 203, and a latch member 105 are arranged on the seat back side member 12 on the vehicle rear side. The air pump 111, the air tank 113 and the control valve 116 are arranged below the seat cushion side member 14.

The seat back side member 12 has a configuration covering the vehicle front side of the air bag 101, and comprises a concave housing portion 12a, a rotation shaft 12b, and an engagement portion 12c. The housing portion 12a serves as a housing space which houses the air bag 101 in the initial state or first state folded in advance in a predetermined shape. The rotation shaft 12b is fixed to the vehicle seat 10 side, and serves as a rotation fulcrum allowing rotation in the arrow 20 and the arrow 22 directions in Fig. 10 of the seat back side member relative to the vehicle seat 10. The engagement portion 112c is a portion with which is engaged the other end of a return spring 203 having an end fixed to the vehicle seat 10 side, and is also a portion engageable with the leading end 105a of a latch member 105. The latch member 105 is made rotatable in the arrow 20 and the arrow 22 directions in Fig. 10 around the rotation shaft 105b by a driving means (actuator) 106 such as an electric motor.

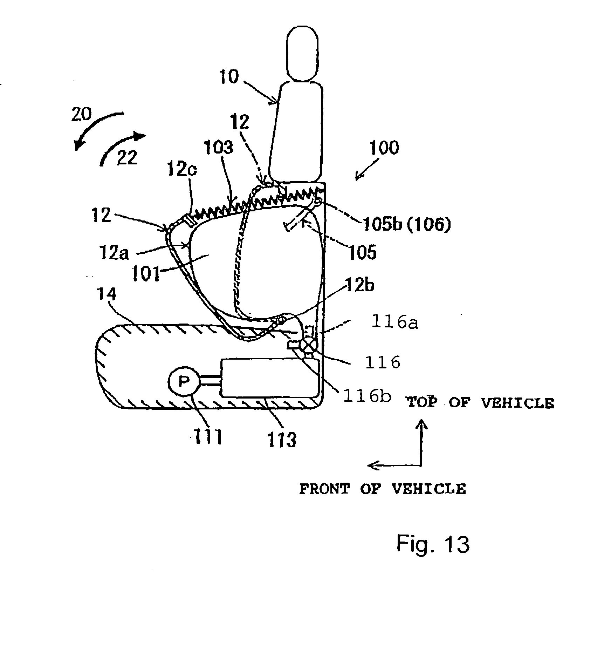

The seat back side member 12 having the above-mentioned configuration can rotate between a first set position shown in Fig. 10 and a second set position shown in Fig. 13 as described later, with the rotation shaft 12b as the fulcrum, and is elastically energized to the first set position by a return spring 203 serving as an example for an elastic spring in the sense of the present invention. Applicable return springs 203 include various types of elastic springs capable of imparting an elastic energizing force such as a coil-shaped and sheet-shaped springs. This seat back side member 12 has a configuration in which, the engagement portion 12c thereof engages with (hooks with) the leading end 105a of the latch member 105 driven by the driving means 106, and this prevents rotation thereof in the arrow 20 direction.

The air pump 111 is a pump having a function of compressing the air (to a high pressure) and feeding the compressed air into the air tank 113. The air tank 113 is a tank having a function of temporarily storing the compressed air fed from the air pump 111.

The control valve 116, installed in an air feeding path between the air bag 101 and the air tank 113, is a valve having a function of feeding the compressed air into the air bag 101 via the air feeding section 116a and discharging the air outside the air bag 101 via the air discharging section 116b from the interior of the air bag 101.

Accordingly, in the passenger protecting apparatus 100 shown in Fig. 8, the valves 115 and 117 of Fig. 1 have been replaced by a single valve 116. As a matter of course, also in a passenger protecting apparatus accommodated in a seat like the one shown in Figs. 8-13 two valves may be used, or one valve may be used in passenger protecting apparatus accommodated in a side wall of a vehicle.

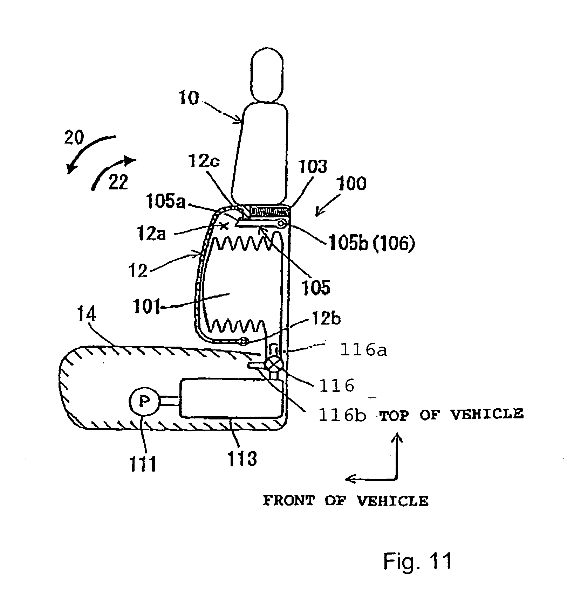

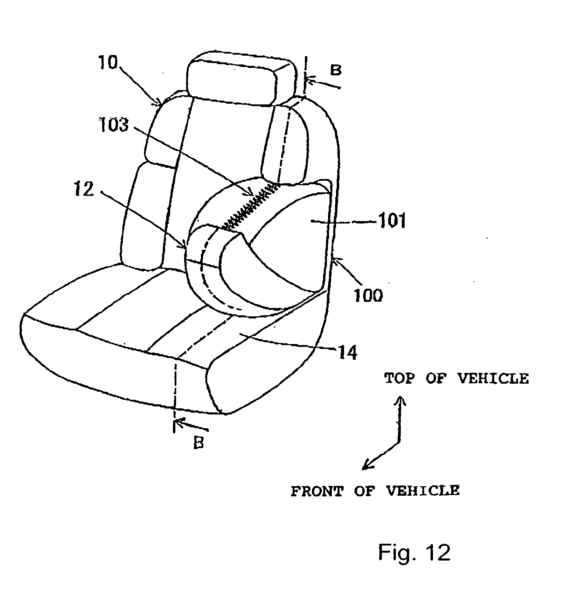

Operation of the passenger protecting apparatus 100 having the above-mentioned configuration will now be described with reference to Figs. 8 to 10, and further, to Figs. 11 to 13. Fig. 11 illustrates a sectional structure of the passenger protecting apparatus 100 of this embodiment in the "initial control" state. Fig. 12 is a perspective view of the vehicle seat 10 in a "collision foreseeing control" state of the passenger protecting apparatus of this embodiment; and Fig. 13 illustrates a sectional structure of the vehicle seat 10 shown in Fig. 12 cut along the line B-B.

In Fig. 8, the radar sensor 120, similar to Fig. 1, detects information about vehicle collision of an object of collision (vehicles, obstacles, etc.) on the side of the vehicle 200, i.e., of the vehicle 210 in this embodiment, constantly or at certain time intervals, and enters the detected information into the control unit 130. The control unit 130 foresees a vehicle collision by determining the possibility of the vehicle 200 (own vehicle) colliding with a vehicle 210 (other vehicle). In response to this collision foreseeing information, the control unit 130 executes controls such as "initial control", "collision foreseeing control", "collision occurrence control", and "collision avoidance control" described later.

At the same time as the start of operation of the vehicle 200, the control unit 130 activates the air pump 111. Therefore, the pressure in the air tank 113 is set in a state elevated to a first pressure in advance. When an object of collision is not detected on a side of the vehicle 200 by the radar sensor 120, i.e., when a side collision is not foreseen, the control unit 130 carries out initial control. By this initial control, the control unit 130 adjusts the pressure in the air bag 101 to a second pressure lower than the first pressure in the air tank 113. More specifically, the control unit 130, while issuing a signal for closing the air discharging section 116b to the control valve 116, outputs a signal for once opening the air feeding section 116a, adjusts the pressure in the air bag 101 to the second level, and issues a signal for closing the air feeding section 116a. As a result, the air bag 101 expands in the housing portion 12a of the seat back side member 12, as shown in Fig. 11, and the inner pressure thereof is kept at the second level.

The control unit 130 issues a control signal to the driving means 106 so as to hold a state in which the leading end 105a of the latch member 105 engages with (is caught by) the engagement portion 12c of the seat back side member 12, as shown in Fig. 11. In this initial control state shown in Fig. 11, the seat back side member 12 is elastically energized by the return spring 203 to the first set position, and the rotation in the arrow 20 direction is prevented by the latch member 105.

When the vehicle 210 approaching a side of the vehicle 200 is detected by the radar sensor 120, and the possibility of the vehicle 210 side-colliding with the vehicle 200 is determined to be high, a collision foreseeing control is conducted. The control unit 130 issues a signal for opening the air feeding section 116a and for closing the air discharging section 116b to the control valve 116, prior to occurrence of the vehicle side collision. As a result, the compressed air of the first pressure by compression applied in advance in the air tank 113 is gradually filled in the air bag 101 via the air feeding section 116a.

As shown in Fig. 13, the control unit 130 issues a control signal to the driving means 106 so as to cancel the engaged state (hooked state) of the leading and 105a of the latch member 105 with the engagement portion of the seat back side member 12. In the state of this collision , foreseeing control shown in Fig. 13, the seat back side member 12 is allowed to make rotation in the arrow 22 direction against the elastic energizing force of the return spring 203. At this point in time, the air bag 101 is deployed and expanded from the ordinary housed state shown in Fig. 11 (the ordinary initial state or first state in which the air bag 101 is housed) to the collision-preparing state or second state shown in Fig. 12 (the state for preparing for actual vehicle collision upon occurrence thereof (preliminary state)). The pressing force of the air bag 101 surpasses the elastic energizing force of the return spring 203. As a result, the seat back side member 12 moves by rotation from the first set position shown in Fig. 11 in the arrow 20 direction to the second set position shown in Fig. 13. The air bag 101 is deployed and expanded along with this into a collision-preparing state in the collision-preparing region. This expanded air bag 101 in the collision-preparing state in the collision-preparing region is kept for passenger protection upon possible subsequent occurrence of a side collision of the vehicle 210 with the vehicle 200. The collision-preparing region shown in Fig. 13 has a configuration of a region lying between the vehicle side wall and the side of the vehicle passenger (head, neck, shoulder, chest, abdomen, knees and lower limbs). In this embodiment, the air bag 101 has such a configuration that the collision-preparing state is closer to the vehicle passenger C than the ordinary housed state, thus permitting rapid coping with passenger protection upon occurrence of a vehicle accident in the collision occurrence control described later.

The state of the air bag 101 shown in Fig. 10 may be adopted as a housed state or first state.

When the vehicle 210 actually side-collides with the vehicle 200 subsequently, i.e., when occurrence of a vehicle collision is detected by the detecting sensor having the above-mentioned configuration, the inner pressure of the air bag 101 is maintained for the air bag 101 deployed and expanded as a collision-preparing state in the collision-preparing region prior to occurrence of the vehicle collision in the collision foreseeing control, or the pressure is adjusted to a lower level by the control valve 116. Under the effect of this air bag 101, the impact force acting on the side of the vehicle passenger (vehicle passenger C in Fig. 8) (head, neck, shoulder, chest, abdomen, knees, and lower limbs) is alleviated, thereby ensuring passenger protection. In other words, in this embodiment, the collision-preparing region serve as a region substantially in agreement with the passenger protecting region protecting the vehicle passenger C, and the collision-preparing state of the air bag 101 serves as the passenger protecting state as it is.

Regarding this collision occurring control, the air bag 101 deployed and expanded as a collision-preparing state in the collision-preparing region prior to occurrence of the vehicle cushion in the collision foreseeing control may further be deployed and expanded as a passenger protecting state in a region different from the collision-preparing region, so as to protect the vehicle passenger C in that region. In this case, the collision-preparing region is formed as a region different from the passenger protecting region which protects the vehicle passenger C. Such a region may be formed as a region lying between the vehicle side wall and the side or the front of the vehicle passenger C (head, neck, shoulder, chest, abdomen, knees and lower limbs). This alleviates the impact force acting on the side or the front of the vehicle passenger C, thus ensuring passenger protection. In other words, in this embodiment, the collision-preparing region is a region different from the passenger protecting region when the vehicle passenger C is protected, and the collision-preparing state of the air bag 101 is configured as a state different from the passenger protecting state.

In this configuration, a series of operations of the air bag 101 ranging from the ordinary housed state, through the collision preparing state, to the passenger protecting state can be carried out more smoothly by setting the collision preparing state so that the air bag 101 in standby prior to the vehicle collision does not disturb the vehicle passenger as far as possible. In this configuration, it suffices that the air bag 101 operations at least between the ordinary housed state and the collision preparing state be reversible or the configuration may be returnable from the passenger protecting state to the collision preparing state, or, after occurrence of the vehicle accident, it may be an irreversible configuration which does not return from the passenger protecting state to the collision preparing state.

On the other hand, when, once determining that the possibility is high for the vehicle 210 to collide with the vehicle 200, the side collision is actually avoided, and the object of collision is no further detected on a side of the vehicle 200 by the radar sensor 120, the control unit 130 performs control so as to cause contraction of the air bag 101 as the ordinary housed state (the state shown in Fig. 10 or in Fig. 11).

In other words, the control unit 130 adjusts the pressure in the air bag 101 to a lower level by this collision avoidance control. More specifically, a signal for opening the air discharge section 116b is issued to the control valve 116. This causes the pressing force of the air bag 101 to comply with the elastic energizing force of the return spring 203, and the seat back side member 12 rotates from the second set position shown in Fig. 13 to the first set position shown in Fig. 11 in the arrow 22 direction, and the air bag 101 contracts as an ordinary housed state. In this embodiment, the air bag 101 is reversibly operable between the ordinary housed state shown in Fig. 10 or 11 and the collision-preparing state shown in Fig. 13.

Subsequently the control unit 130 activates the air pump 111 as in the initial control described above, sets the pressure in the air tank 113 in a state elevated in advance to the level of the first pressure, adjusts the pressure in the air bag 101 to the second pressure lower than the first pressure in the air tank 113 to prepare for the next collision foreseeing control.

According to this embodiment, the seat back side member 12 forming a part of the vehicle seat is used also as an air bag cover which covers the air bag 101, thereby permitting rational use of component parts.

According to this embodiment, the seat back side member 12 as the air bag cover is operated by the utilization of the expansion force of the air bag 101 and the elastic energizing force of the return spring 103, thus permitting simplification of the structure.

In the above-mentioned embodiment of Figs. 8 to 13, the case has been described in which the seat back side member 12 serving as the air bag cover is operated by using the expansion force of the air bag 101 and the elastic energizing force of the return spring 203.

The above-mentioned embodiment has described cases where the passenger protecting apparatus 100 is housed over portion corresponding to the seat back side portion and the seat cushion side portion from among the various portions of the vehicle seat 10. In the present invention; the configuration is required only to be such that the passenger protecting means such as the air bag is operated reversibly between the ordinary housed state and the collision-preparing state, this making it possible to mount the passenger protecting apparatus at various portion of the vehicle seat.

In the above-mentioned embodiment, the case where the air bag 101 is the state shown in Fig. 11 (inner pressure is held at a second pressure) is deployed and expanded in the state shown in Fig. 13 in the collision foreseeing control has been described. In the present invention, however, the configuration may be such that the air bag 101 in the state shown in Fig. 10 is deployed and expanded in the state shown in Fig. 13 through the state shown in Fig. 11 or as it is.

According to the passenger protecting apparatuses 100 of the first embodiment, as described above with reference to Figs. 8-13, it is possible to achieve a configuration using the air bag 101 for ensuring rapid passenger protection upon occurrence of a vehicle accident. More specifically, in this embodiment, when a vehicle collision is foreseen, the air bag 101 can be expanded in advance from the ordinary housed state to the collision-preparing state to prepare for a subsequent occurrence of an accident. This permits rapid execution of passenger protection upon occurrence of a vehicle accident as it is by using an air bag 101 expanded in advance before the vehicle collision so as to achieve the collision-preparing state. Particularly as in this embodiment, by adapting a configuration in which the passenger protecting means 100 is attached to the vehicle seat arranged in the proximity of, or in close contact with, the vehicle passenger, it is possible to more rapidly cope with passenger protection upon occurrence of a vehicle accident. In this embodiment, when the vehicle collision does not actually occurs, it is possible to cause the air bag 101 to return from the collision-preparing state to the ordinary housed state to prepare for the next collision forecasting, thus providing a rational configuration.

By using the passenger protecting apparatus 100 of this embodiment as described above, passenger protection upon occurrence of a vehicle accident can be rapidly coped with by use of the air bag 101 deployed and expanded so as to achieve a collision-preparing state in advance before the vehicle collision.

The present invention is not limited to the above-mentioned embodiments, but various applications and variations are conceivable. For example, the following embodiments can be achieved by applying the above-mentioned embodiments.

In the above-explained embodiment, the passenger protecting apparatus 100 which protects the passenger C sitting in a seat to the right of the vehicle, by being accommodated in a right vehicle seat have been presented as example. A passenger protecting apparatus for protecting a passenger sitting in the left seat of the vehicle can similarly be installed. In the present invention, the passenger protecting apparatus 100 can be located at a different portion of the seat. For example, a passenger protecting apparatus having a configuration similar to that of the passenger protecting apparatus 100 can be incorporated in the seat, for example at a seat side portion including a portion opposite to the vehicle side wall or the front portion of the seat cushion.

At the time of a vehicle accident, a passenger sitting in a seat tends to move forward from the seat or diagonally downward from the seat by slipping through the seat belt. The present invention is applicable to a passenger protecting apparatus for ensuring passenger protection by preventing this tendency known as a "submarine phenomenon". The submarine phenomenon can be prevented, for example, by incorporating an expanding article such as an air bag in the front portion of the seat cushion, expanding the expanding article, when a vehicle collision is foreseen, to cause the front portion of the seat cushion to bulge upward in advance, thereby lifting up the femora of the passenger, thereby preventing the submarine phenomenon from occurring in a collision. Or, the submarine phenomenon can be prevented in a collision by providing a protecting pad (protecting board) in the front portion of the seat cushion, and moving the protecting pad (protecting board) up above the seat in advance when a vehicle collision is foreseen to lift up the femora of the passenger.

As described above, the present invention is not limited to technique for ensuring passenger protection in a side collision as in the above-mentioned embodiments, but is applicable to techniques for ensuring passenger protection also in front collision.

The above-mentioned embodiments cover cases where passenger protecting means such as an air bag 101 is arranged at the passenger protecting position P2 before a vehicle collision, and upon occurrence of a vehicle accident, the passenger is protected at the passage protecting position P2. In the present invention, however, it is possible to use a configuration in which the passenger protecting means is arranged at a position more distant toward the vehicle than the passenger protecting position P2 prior to the vehicle collision. More particularly, as already pointed out passenger protection can be achieved by arranging the passenger protecting means at a middle position P1 in advance before occurrence of a vehicle collision, and upon occurrence of the vehicle accident, moving the passenger protecting means from the middle position P1 to the passenger protecting position P2 (the "third position" in the present invention).

In the above-mentioned embodiments, the configurations of the vehicle passenger protecting apparatuses mounted on an automobile have been described. The present invention is also applicable to a vehicle passenger protecting apparatus mounted on any of various vehicles other than an automobile such as a train, a ship and the like.

## Claims

1. A vehicle seat (10) with a vehicle passenger protecting apparatus (100), comprising:
passenger protecting means (101) which, upon occurrence of a vehicle collision, protects a passenger (C) on the seat (10) of said vehicle (200);
wherein said passenger protecting means comprises an expandable/contractible air bag (101);
driving means (111, 113, 116, 116a, 116b; 402; 502; 602) capable of driving said passenger protecting means (101; 401),
wherein said driving means comprises gas feeding means (111, 113, 116, 116a) capable of feeding a gas for expansion into the interior of said air bag (101); and
an air bag cover (12) covering said air bag (101) forms a part of said vehicle seat (10), and is operable between a first set position where said air bag cover (12) covers said air bag (101) in a first state and a second set position where said air bag cover (12) allows expansion leading to a second state of said air bag (101),
**characterized in that**
said driving means (111, 113, 116, 116a, 116b; 402; 502; 602) are capable of driving said passenger protecting means (101; 401) reversibly between said first state and a collision-preparing second state and comprise gas discharging means (116, 116b) capable of discharging the gas from the interior of said air bag (101);
control means (130) which controls said driving means (111, 113, 116, 116a, 116b);
wherein:
said control means (130) is adapted to control, when a vehicle collision is foreseen, said gas feeding means (111, 113, 116, 116a) and said gas discharging means (116, 116b) so as to cause said air bag (101) to expand into said second state prior to the vehicle collision and to control said gas feeding means (111, 113, 116, 116a) and said gas discharging means so as to cause said air bag to contract into said first state when a vehicle collision is avoided,
and **in that** the vehicle passenger protection apparatus (100) further comprises an energizing means (103) for energizing said air bag (101) to said first state such that said air bag (101) expands into said second state against an energizing force provided by said energizing means (103) and collapses into said first state supported by said energizing force.

2. The vehicle seat (10) according to claim 1,
the vehicle passenger protection apparatus (100) comprising detecting means (120) for detecting information about a collision of said vehicle (200), wherein the control means (130) are adopted to control said driving means (111, 113, 116, 116a, 116b) when said detecting means (120) foresees a vehicle collision.

3. The vehicle seat (10) according to claim 1 or claim 2,
wherein said second state is a state where said passenger protecting means (101) is closer to said passenger (C) of said vehicle (200) than in said first state.

4. The vehicle seat (10) according to any one of the preceding claims,
wherein said first state is a housed state.

5. The vehicle seat (10) according to any one of the preceding claims, wherein:
said air bag cover (12) is elastically energized by an elastic spring (203) to said first set position; and
during the process of expansion into said second state, said air bag (101) presses said air bag cover (12) from said first set position to said second set position against the elastic energizing force of said elastic spring (203), and during the process of contraction into said first state, said air bag (101) is pressed, into said first state by said air bag cover (102) operating to said first set position in accordance with the elastic energizing force of said elastic spring (203).

6. The vehicle seat (10) according to any one of the preceding claims, wherein
said second state corresponds to a position in a passenger protecting region in which the passenger (C) is protected; and
said control means (130) is adapted to control, upon occurrence of a vehicle collision, said driving means (111, 113, 116, 116a, 116b) so as to arrange said passenger protecting means (101) in said second state, whereby the passenger (C) is protected via said passenger protecting means (101).

7. The vehicle seat (10) according to any one of claims 1 to 6, wherein:
said second state corresponds to a position spaced apart from a passenger protecting region where the passenger (C) is protected and
said control means (130) is adapted to control, upon occurrence of an accident of the vehicle (200), said driving means (111, 113, 116, 116a, 116b) so as to arrange said passenger protecting means (101) from said second state to a third state corresponding to a position in said passenger protecting region, whereby the passenger (C) is protected via said passenger protecting means.

8. The vehicle seat (10) according to claim 7,
wherein said second state corresponds to a position spaced apart from said passenger protecting region towards a side portion of said vehicle (200).

9. A passenger-protecting vehicle (200) having the vehicle seat (10) of any one of claims 1 to 8.

## Patentansprüche

1. Fahrzeugsitz (10) mit einer Fahrzeugpassagierschutzvorrichtung (100), umfassend:
ein Passagierschutzmittel (101), welches beim Auftreten einer Fahrzeugkollision einen Passagier (C) auf dem Sitz (10) des Fahrzeugs schützt,
wobei das Passagierschutzmittel einen ausdehnbaren/zusammenziehbaren Airbag (101) umfasst,
ein Antriebsmittel (111, 113, 116, 116a, 116b; 402; 502; 602), welche in der Lage ist, das Passagierschutzmittel (101; 401) anzutreiben,
wobei das Antriebsmittel ein Gaszufuhrmittel (111, 113, 116, 116a) umfasst, welches in der Lage ist, ein Gas zum Ausdehnen in das Innere des Airbags (101) zuzuführen, und
eine Airbagabdeckung (12), welche den Airbag (101) abdeckt und einen Teil des Fahrzeugsitzes (10) bildet und welche zwischen einer ersten festgelegten Position, in welcher die Airbagabdeckung (12) den Airbag in einem ersten Zustand bedeckt, und einer zweiten festgelegten Position, in welcher die Airbagabdeckung (12) eine Expansion ermöglicht, welche zu einem zweiten Zustand des Airbags (101) führt, betreibbar ist,
**dadurch gekennzeichnet, dass**
das Antriebsmittel (111, 113, 116, 116a, 116b; 402; 502; 602) in der Lage ist, das Passagierschutzmittel (101; 401) reversibel zwischen dem ersten Zustand und einem eine Kollision vorbereitenden zweiten Zustand anzutreiben und ein Gasablassmittel (116, 116b) umfasst, welches in der Lage ist, das Gas aus dem Inneren des Airbags (101) abzulassen,
ein Steuermittel (130), welches das Antriebsmittel (111, 113, 116, 116a, 116b) steuert, wobei
das Steuermittel (130) eingerichtet ist, wenn eine Fahrzeugkollision vorhergesehen wird, das Gaszufuhrmittel (111, 113, 116, 116a) und das Gasablassmittel (116, 116b) anzusteuern, um zu bewirken, dass sich der Airbag (101) vor der Fahrzeugkollision in den zweiten Zustand ausdehnt, und das Gaszufuhrmittel (111, 113, 116, 116a) und das Gasablassmittel anzusteuern, um zu bewirken, dass sich der Airbag in den ersten Zustand zusammenzieht, wenn eine Fahrzeugkollision vermieden wird,
und dass die Fahrzeugpassagierschutzvorrichtung (100) ein Vorspannungsmittel (103) zum Vorspannen des Airbags (101) zu dem ersten Zustand hin umfasst, so dass der Airbag (101) sich in den zweiten Zustand gegen eine von dem Vorspannungsmittel (103) bereitgestellten Vorspannkraft ausdehnt und unterstützt von dem Vorspannungsmittel in den ersten Zustand zusammenfällt.

2. Fahrzeugsitz (10) gemäß Anspruch 1,
wobei die Fahrzeugpassagierschutzvorrichtung (100) ein Detektionsmittel (120) zum Detektieren einer Information bezüglich einer Kollision des Fahrzeugs (200) umfasst, wobei das Steuermittel (130) eingerichtet ist, das Antriebsmittel (111, 113, 116, 116a, 116b) anzusteuern, wenn das Detektionsmittel (120) eine Fahrzeugkollision vorhersagt.

3. Fahrzeugsitz (10) gemäß Anspruch 1 oder Anspruch 2,
wobei der zweite Zustand ein Zustand ist, in dem das Passagierschutzmittel (101) näher an dem Passagier (C) des Fahrzeugs (200) ist als in dem ersten Zustand.

4. Fahrzeugsitz (10) gemäß einem der vorhergehenden Ansprüche,
wobei der erste Zustand ein Zustand im Gehäuse ist.

5. Fahrzeugsitz (10) gemäß einem der vorhergehenden Ansprüche, wobei:
die Airbagabdeckung (12) durch eine elastische Feder (203) elastisch in die erste festgelegte Position vorgespannt wird, und
wobei während des Prozesses der Expansion in den zweiten Zustand der Airbag (101) die Airbagabdeckung (12) gegen die elastische Vorspannkraft der elastischen Feder (203) von der ersten festgelegten Position zu der zweiten festgelegten Position drückt, und wobei während dem Prozess des Zusammenziehens in den ersten Zustand der Airbag (101) durch die Airbagabdeckung (102), welche sich gemäß der elastischen Vorspannkraft der elastischen Feder (203) in die erste festgelegte Position arbeitet, in den ersten Zustand gedrückt wird.

6. Fahrzeugsitz (10) gemäß einem der vorhergehenden Ansprüche, wobei
der zweite Zustand einer Position in einem Passagierschutzgebiet, in welcher der Passagier (C) geschützt ist, entspricht, und
das Steuermittel (130) eingerichtet ist, beim Auftreten einer Fahrzeugkollision das Antriebsmittel (111, 113, 116, 116a, 116b) anzusteuern, um das Passagierschutzmittel (101) in dem zweiten Zustand anzuordnen, wodurch der Passagier (C) über das Passagierschutzmittel (101) geschützt ist.

7. Fahrzeugsitz (10) gemäß einem der Ansprüche 1 bis 6, wobei:
der zweite Zustand einer Position entspricht, welche von einem Passagierschutzgebiet, in dem der Passagier (C) geschützt ist, beabstandet ist, und
wobei das Steuermittel (130) eingerichtet ist, beim Auftreten eines Unfalls des Fahrzeugs (200) das Antriebsmittel (111, 113, 116, 116a, 116b) so zu steuern, dass das Passagierschutzmittel (101) ausgehend von dem zweiten Zustand in einem dritten Zustand angeordnet wird, welcher einer Position in dem Passagierschutzgebiet entspricht, wodurch der Passagier (C) über das Passagierschutzmittel geschützt ist.

8. Fahrzeugsitz (10) gemäß Anspruch 7,
wobei der zweite Zustand einer Position entspricht, welche von dem Passagierschutzgebiet zu einem Seitenabschnitt des Fahrzeugs (200) hin beabstandet ist.

9. Passagierschützendes Fahrzeug (200) mit dem Fahrzeugsitz (10) nach einem der Ansprüche 1 bis 8.

## Revendications

1. Siège de véhicule (10) doté d'un appareil de protection de passager de véhicule (100), comprenant :
un moyen de protection de passager (101) qui, lors de la survenue d'une collision de véhicule, protège un passager (C) sur le siège (10) dudit véhicule (200) ;
dans lequel ledit moyen de protection de passager comprend un coussin gonflable (101) dilatable/contractile ;
des moyens d'entraînement (111, 113, 116, 116a, 116b ; 402 ; 502 ; 602) capables d'entraîner ledit moyen de protection de passager (101 ; 401),
dans lequel lesdits moyens d'entraînement comprennent un moyen d'alimentation en gaz (111, 113, 116, 116a) capable de fournir un gaz pour une dilatation à l'intérieur dudit coussin gonflable (101) ; et
un couvre-coussin gonflable (12) couvrant ledit coussin gonflable (101) forme une partie dudit siège de véhicule (10), et est opérationnel entre une première position établie où ledit couvre-coussin gonflable (12) couvre ledit coussin gonflable (101) dans un premier état et une seconde position établie où ledit couvre-coussin gonflable (12) permet une dilatation menant à un deuxième état dudit second coussin gonflable (101),
**caractérisé en ce que**
lesdits moyens d'entraînement (111, 113, 116, 116a, 116b ; 402 ; 502 ; 602) sont capables d'entraîner ledit moyen de protection de passager (101 ; 401) de façon réversible entre ledit premier état et un deuxième état de préparation de collision et comprennent un moyen d'évacuation de gaz (116, 116b) capable d'évacuer le gaz de l'intérieur dudit coussin gonflable (101) ;
un moyen de commande (130) qui commande lesdits moyens d'entraînement (111, 113, 116, 116a ; 116b);
dans lequel :
ledit moyen de commande (130) est adapté pour commander, lorsqu'une collision de véhicule est prévue, ledit moyen d'alimentation en gaz (111, 113, 116, 116a) et ledit moyen d'évacuation de gaz (116, 116b) de façon à amener ledit coussin gonflable (101) à se dilater dans ledit deuxième état avant la collision du véhicule et à commander ledit moyen d'alimentation en gaz (111, 113, 116, 116a) et ledit moyen d'évacuation de gaz de façon à amener ledit coussin gonflable à se contracter dans ledit premier état lorsqu'une collision du véhicule est évitée,
et **en ce que** l'appareil de protection de passager de véhicule (100) comprend en outre un moyen d'activation (103) pour activer ledit coussin gonflable (101) dans ledit premier état de sorte que ledit coussin gonflable (101) se dilate dans ledit deuxième état contre une force d'activation fournie par ledit moyen d'activation (103) et s'affaisse dans ledit premier état supporté par ladite force d'activation.

2. Siège de véhicule (10) selon la revendication 1,
l'appareil de protection de passager de véhicule (100) comprenant un moyen de détection (120) pour détecter une information concernant une collision dudit véhicule (200), dans lequel le moyen de commande (130) est adapté pour commander lesdits moyens d'entraînement (111, 113, 116, 116a, 116b) lorsque ledit moyen de détection (120) prévoit une collision du véhicule.

3. Siège de véhicule (10) selon la revendication 1 ou la revendication 2,
dans lequel ledit deuxième état est un état où ledit moyen de protection de passager (101) est plus proche dudit passager (C) dudit véhicule (200) que dans ledit premier état.

4. Siège de véhicule (10) selon l'une quelconque des revendications précédentes,
dans lequel ledit premier état est un état contenu.

5. Siège de véhicule (10) selon l'une quelconque des revendications précédentes, dans lequel :
ledit couvre-coussin gonflable (12) est activé élastiquement par un ressort élastique (203) vers ladite première position établie ; et
pendant le processus de dilatation dans ledit second état, ledit coussin gonflable (101) presse ledit couvre-coussin gonflable (12) de ladite première position établie à ladite seconde position établie contre la force d'activation élastique dudit ressort élastique (203), et pendant le processus de contraction dans ledit premier état, ledit coussin gonflable (101) est poussé dans le premier état par ledit couvre-coussin gonflable (102) se mettant dans ladite première position établie en correspondance à la force d'activation élastique dudit ressort élastique (203).

6. Siège de véhicule (10) selon l'une quelconque des revendications précédentes, dans lequel :
ledit deuxième état correspond à une position dans une région de protection de passager dans laquelle le passager (C) est protégé ; et
ledit moyen de commande (130) est adapté pour commander, lors de la survenue d'une collision du véhicule, ledit moyen d'entraînement (111, 113, 116, 116a, 116b) de façon à agencer lesdits moyens de protection de passager (101) dans ledit second état, moyennant quoi le passager (C) est protégé via ledit moyen de protection de passager (101).

7. Siège de véhicule (10) selon l'une quelconque des revendications 1 à 6, dans lequel :
ledit deuxième état correspond à une position espacée d'une région de protection de passager où le passager (C) est protégé et
ledit moyen de commande (130) est adapté pour commander, lors de la survenue d'un accident du véhicule (200), lesdits moyens d'entraînement (111, 113, 116, 116a, 116b) de façon à agencer ledit moyen de protection de passager (101) dudit deuxième état à un troisième état correspondant à une position dans ladite région de protection de passager, moyennant quoi le passager (C) est protégé via ledit moyen de protection de passager.

8. Siège de véhicule (10) selon la revendication 7,
dans lequel ledit deuxième état correspond à une position espacée de ladite région de protection de passager vers une portion latérale dudit véhicule (200).

9. Véhicule de protection de passager (200) comportant le siège de véhicule (10) de l'une quelconque des revendications 1 à 8.
